# EUROPEAN PATENT APPLICATION

(11) **EP 2 320 007 A1**
(43) Date of publication of application: **11.05.2011**
(21) Application number: 10189909.4
(22) Date of filing: 03.11.2010
(51) Int. Cl.: E04F 15/024, F24D 3/16

(54) **Radiating module for raised floors, and raised floor comprising a series of such radiating modules**

(30) Priority: 03.11.2009 IT PD20090327
(71) Applicant: Nest Italia S.R.L., 31030 Altivole (TV) (IT); P.M. Contract S.r.l., 35018 San Martino di Lupari PD (IT)
(72) Inventor: Feo, Domenico, 31030 ALTIVOLE TV (IT); Ferro, Andrea, 31023 RESANA Frazione Castelminio TV (IT); Marchetti, Gian Pietro, 35018 SAN MARTINO DI LUPARI PD (IT); Zanardo, Renzo, 31039 MARENO DI PIAVE TV (IT)
(74) Representative: Modiano, Micaela Nadia

(57) **Abstract**

A radiating module (10) for providing floors, which comprises a thermally insulating tray (11) for containing a complementarily shaped flat radiating element (12) with an internal interspace (13) for the transit of a heat transfer fluid, and with laterally protruding tubular portions (14, 15) for the inflow and outflow of the heat transfer fluid.

## Description

The present invention refers to a radiating module for providing floors.

The invention also relates to a raised floor comprising a series of such radiating modules.

Nowadays raised floors represent an optimal solution for improving the design flexibility of spaces and for simplifying the integration capability of systems and their modifiability over time, as well as enabling reuse.

A raised floor is generally constituted by an array of cross-members, which are supported at the nodes by ground resting posts designed to support covering panels, which rest on the posts, and upon these covering panels floor panels are then laid that can be walked on, which are called "self-laying" floor panels, i.e. they need only to be placed on the underlying supporting panels.

Modules for providing radiating raised floors are also known nowadays, which make it possible to combine the advantages of traditional raised floors with the advantages of underfloor heating and air-conditioning.

Such known modules comprise a bottom, or tray, made of sheet metal, for containing a framework made of folded strips of metal which has an array of protrusions designed to define ordered channels for laying a passage tube for a heat transfer fluid, typically water.

The tray with the framework and the tube is filled with light cellular concrete, and is closed in an upper region with a cover which is then covered again with a surface that can be walked on, and is covered underneath with heat-insulating film to prevent heat from being dispersed towards the underfloor interspace.

The tube enters and exits through two corresponding holes which are provided on the bottom or tray, and its inlet and outlet are designed to be joined to corresponding main ducts for the delivery and return of the heat transfer fluid, which are made to pass under the floor and are laid before the provision of such floor.

These known modules have a number of drawbacks.

A first drawback is constituted by the structural complexity of a single module, which requires numerous and lengthy installation operations, as well as numerous and lengthy laying operations, in addition the adoption of special materials which are not cheap.

A second drawback of such known modules consists in the fact that the tube is arranged in a coil fashion in the tray that supports it, an arrangement which, although now commonly used, produces regions of different temperatures in the same module, depending on whether there is a section of coil under the floor surface to be walked on or not.

A further drawback of such known modules consists in the rather inconvenient operation of removing the radiating part, i.e. the tray with the tube embedded in cellular concrete, since the tube has two connections to two ducts which are laid under the floor, and it cannot be assumed that, when the floor is finished, the connections for a certain panel will be right under the panel itself, since during manipulation of the ducts they could be moved under an adjacent panel, and thus not be accessible except by lifting of the adjacent panel as well.

The aim of the present invention is to provide a radiating module for providing floors that is capable of overcoming the above-mentioned drawbacks of modules of the known type.

Within this aim, an object of the invention is to provide a radiating module that is easy to assemble and quickly installed.

Another object of the invention is to provide a radiating module that is capable of a better surface heat uniformity than the known art.

A further object of the invention is to provide a radiating module that is also quick and simple to remove, without the necessity of intervening under adjacent modules as well.

Another object of the invention is to provide a raised floor that comprises a series of radiating modules.

Another object of the invention is to provide a radiating module for providing floors, as well as a raised floor comprising a series of such radiating modules, that are structurally simple and can be produced using technologies and apparatuses that are known per se, at low cost.

This aim, as well as these and other objects which will become better evident hereinafter, are achieved by a radiating module for providing floors, characterized in that it comprises a thermally insulating tray for containing a complementarily shaped flat radiating element with an internal interspace for the transit of a heat transfer fluid, and with laterally protruding tubular portions for the inflow and outflow of the heat transfer fluid.

Advantageously, a raised floor, of the type that comprises an array of cross-members which are supported at the nodes by ground resting posts, is characterized in that in at least part of the compartments formed between said cross-members there are thermally insulating trays, supported by said cross-members, for containing complementarily shaped flat radiating elements, each flat radiating element having an internal interspace for the transit of a heat transfer fluid, and laterally protruding tubular portions for the inflow and outflow of said heat transfer fluid, said trays, with the respective flat element, being covered in an upward region by corresponding metal panels to be walked on which rest on said array of cross-members.

Further characteristics and advantages of the invention will become better apparent from the detailed description that follows of a preferred, but not exclusive, embodiment of the module according to the invention, as well as of the floor according to the invention, illustrated by way of non-limiting example in the accompanying drawings, wherein:
Figure 1 is an end view of the module according to the invention;
Figure 2 is an exploded perspective view of the module according to the invention;
Figure 3 is a plan view of an example of a raised floor comprising a series of modules according to the invention;
Figure 4 shows the floor in Figure 3 with the panels to be walked on and the covering as well;
Figure 5 is a transverse cross-sectional view of a flat radiating element in a first embodiment thereof;
Figure 6 is a transverse cross-sectional view of a flat radiating element in a second embodiment thereof;
Figure 7 is a cross-sectional plan view of the flat radiating element in its first embodiment;
Figure 8 is a cross-sectional plan view of the flat radiating element in its second embodiment.

With reference to the figures, a radiating module for providing floors according to the invention is generally indicated with the reference number 10.

The radiating module 10 comprises a thermally insulating tray 11 for containing a complementarily shaped flat radiating element 12.

The flat radiating element 12 has an internal interspace 13 for the distribution and transit of a heat transfer fluid, and laterally protruding tubular portions 14 and 15 for the inflow and outflow of the heat transfer fluid.

The tray 11 is made of plastics, for example fire-resistant expanded polystyrene.

Naturally, it is understood that the tray 11 can also be made of other, similar and equivalent materials.

The tray 11 acts as a support for the flat radiating element 12 and at the same time as a heat containment shield for the heat emanated by the radiating element 12 towards the interspace 20 which is defined between the module 10 and the ground 21.

The flat radiating element 12 is made of plastics, by forming and joining of two parts, or by forming and overforming, or by other similar and equivalent methods.

The radiating element 12 has (not shown for the sake of simplicity) a sheet of expanded polystyrene which functions as a thermal insulation toward the interspace 20.

The radiating element 12 has, on the tubular portions 14 and 15 for the inflow and outflow of the heat transfer fluid, connectors 16 and 17, for example of the standard quick attach-release type, for coupling the tubes 25, 26, 26a and 27, described below, for the passage of fluid.

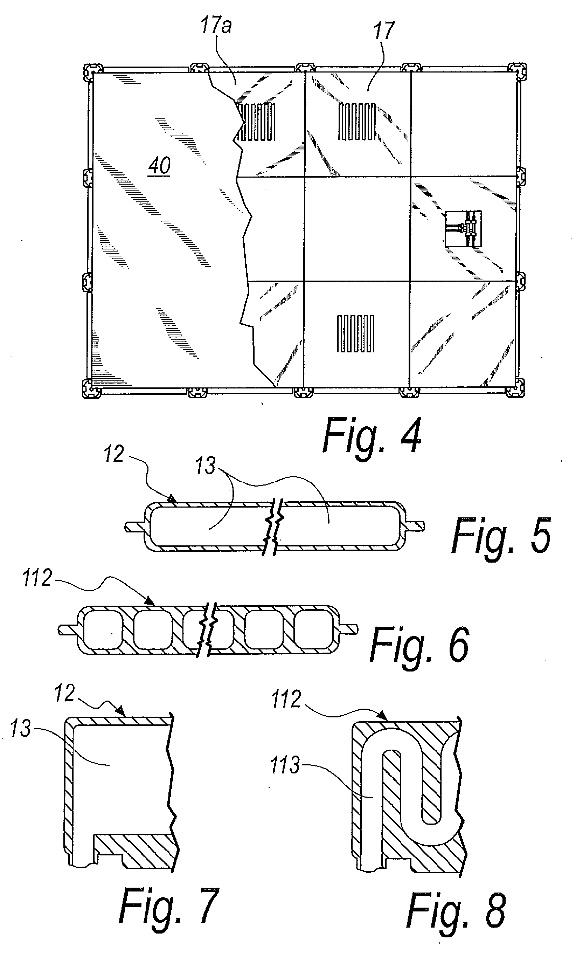

In a first embodiment of the invention, the flat radiating element 12, the sections of which can be seen in Figures 5 and 7, has an interspace 13 which is constituted by a single compartment, which has a substantially quadrilateral plan shape.

In a second embodiment of the invention, the flat radiating element 112, the sections of which can be seen in Figures 6 and 8, has an interspace 113 which is coiled in shape, so as to convey the heat transfer fluid according to preferred paths.

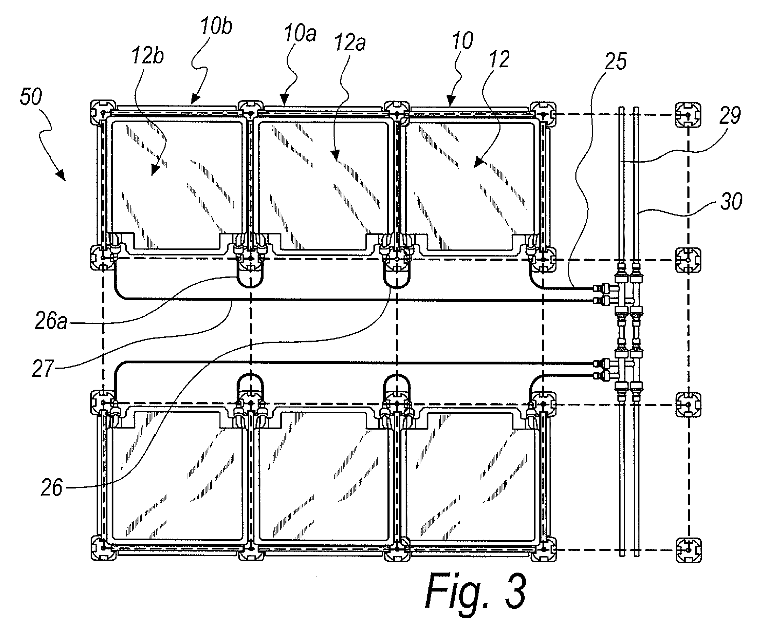

The invention also relates to a raised floor, indicated in Figure 3 with the reference numeral 50, comprising a series of radiating modules 10, 10a, 10b and 10c according to the invention.

The raised floor 50 is of the type that comprises an array of cross-members 18 which are supported at the nodes by ground resting posts 19.

In at least part of the compartments defined between the cross-members 18 there are thermally insulating trays 11, 11a, 11b respectively, supported by the cross-members, for containing complementarily shaped flat radiating elements 12, 12a, 12b.

Each flat radiating element 12, 12a and 12b has an internal interspace 13 for the transit of a heat transfer fluid, and laterally protruding tubular portions 14, 15 for the inflow and outflow of the heat transfer fluid.

The trays 11, with the respective flat element 12, are covered in an upper region by corresponding load-bearing covering panels 17, which can be walked on and rest on the posts 19 of the array of cross-members 18.

The load-bearing covering panels, 17 and 17a, are made of a material that conducts heat, and therefore preferably metal material, but obviously it is understood that they can be made of other similar and equivalent materials.

In particular, the heat transmission between the radiating element 12 and the covering panel 17 occurs predominantly by contact between these elements, and the passage of heat in one direction, for heating, or in the opposite direction, for cooling the environment, occurs by conduction.

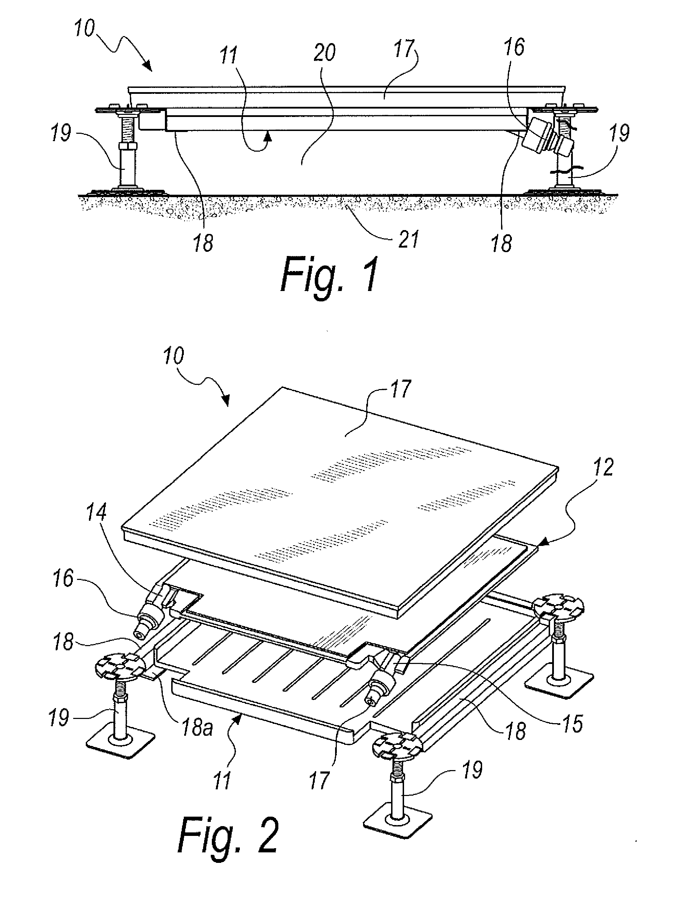

In the non-limiting embodiment of the invention described herein, the cross-members 18 are S-shaped in section and the tray 11 rests on their lower horizontal ledge 18a, of which an end portion can be seen in Figure 2.

As in the example of Figure 3, a floor 50 which is provided by the laying of a series of radiating modules 10, 10a, 10b and the following according to the invention, has a first tube 25 which connects a first supply main 29 to a first connector, for inflow, of a first radiating element 12 of a first module 10 according to the invention; a second tube 26 for connection between the second connector of the first radiating element 12 and the first connector of the second radiating element 12a of a second, adjacent module 10a; a third tube 26a for connection between the second connector of the second radiating element 12a and the first connector of the third radiating element 12b of a third adjacent module 10b; a fourth tube 27 connected between the second connector of the third radiating element 12b and a second discharge channel 30 of the heat transfer fluid.

Figure 4 shows the floor 50 of Figure 3, completed with the load-bearing metallic covering panels, 17 and 17a, which are in turn covered with a generic covering 40.

In practice it has been found that the invention fully achieves the intended aim and objects.

In particular, with the invention a radiating module for providing floors is developed, which is easy to assemble and quickly installed, thanks to its few components, the tray 11 and the radiating element 12, and to the use of connectors for the quick coupling of tubes.

With these components, there is no need for lengthy operations of cutting and folding sheet metal to produce the metal tray from known modules; there is no need to cut and fold the tube-carrying framework and install it in the tray, and there is no need to cast light cellular concrete, with savings of time and raw materials.

Moreover, with the invention a module is developed that has a better surface heat uniformity than the known art, thanks to an interspace 13 which is constituted by a single compartment, or to an interspace 113 which defines a coil with parallel channels that are very close.

Furthermore, with the invention a module is developed that is also simple and quick to remove, also without the need of intervening under adjacent modules, since the quick attach-release connectors 23 and 24 are part of the radiating element 12 and therefore are easily accessible merely by lifting of the panel 17 to be walked on which covers the radiating element 12 in question.

Moreover, with the invention a raised floor comprising a series of radiating modules as described above is developed, which can be easily assembled and explored thanks to the advantages of the radiating module according to the invention.

Moreover, with the invention a radiating module for floors is developed, as well as a raised floor comprising a series of such radiating modules, which are structurally simple and which can be produced using technologies and apparatuses that are known per se, and at low cost.

The invention thus conceived is susceptible of numerous modifications and variations, all of which are within the scope of the appended claims; in addition, all the details may be replaced by other technically equivalent elements.

In practice the materials employed, as well as the dimensions and the contingent shapes, may be any according to requirements and to the state of the art.

The disclosures in Italian Patent Application No. PD2009A000327 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A radiating module (10) for providing floors, **characterized in that** it comprises a thermally insulating tray (11) for containing a complementarily shaped flat radiating element (12) with an internal interspace (13) for the transit of a heat transfer fluid, and with laterally protruding tubular portions (14, 15) for the inflow and outflow of the heat transfer fluid.

2. The module according to claim 1, **characterized in that** said tray (11) is made of plastics and preferably of fire-resistant expanded polystyrene.

3. The module according to the preceding claims, **characterized in that** said flat radiating element (12) is made of plastics.

4. The module according to the preceding claims, **characterized in that** said flat radiating element (12) has, on the tubular portions (14, 15) for the inflow and outflow of the heat transfer fluid, connectors (16, 17) for the quick coupling of tubes (25, 26, 26a, 27) for the passage of fluid.

5. The module according to the preceding claims, **characterized in that** said flat radiating element (12) has an interspace (13) constituted by a single compartment which has a substantially quadrilateral plan shape.

6. The module according to claims 1 to 4, **characterized in that** said radiating flat element (112) has an interspace (113) which is coil-shaped.

7. A raised floor (50), of the type that comprises an array of cross-members (18) which are supported at the nodes by ground resting posts (19), **characterized in that** in at least part of the compartments formed between said cross-members (18) there are thermally insulating trays (11, 11a, 11b), supported by said cross-members, for containing complementarily shaped flat radiating elements (12, 12a, 12b), each radiating flat element having an internal interspace (13) for the transit of a heat transfer transfer fluid, and laterally protruding tubular portions (14, 15) for the inflow and outflow of said heat transfer fluid, said trays (11), with the respective flat element (12), being covered in an upward region by corresponding load-bearing covering panels (17) which rest on the posts (19) of said array of cross-members (18).
